## Europäisches Patentamt

## European Patent Office

## Office européen des brevets

(11) Numéro de publication: **0 050 086**
**B1**

(12) **FASCICULE DE BREVET EUROPEEN**

(45) Date de publication du fascicule du brevet:
**15.02.84**

(21) Numéro de dépôt: **81420144.8**

(22) Date de dépôt: **08.10.81**

(51) Int. Cl.³: **H 01 H 21/10,** B 62 J 5/16,
H 01 H 21/28

(54) **Contacteur de feu arrière "stop" pour véhicule tel que cyclomoteur ou motocyclette.**

(30) Priorité: **14.10.80 FR 8022198**

(43) Date de publication de la demande:
**21.04.82 Bulletin 82/16**

(45) Mention de la délivrance du brevet:
**15.02.84 Bulletin 84/7**

(84) Etats contractants désignés:
**AT BE DE IT NL**

(56) Documents cités:
**DE - C - 1 279 166**
**GB - A - 788 629**
**GB - A - 867 558**

(73) Titulaire: **ANGENIEUX-CLB S.A. Société anonyme dite:,
11 rue de l'Egalerie, F-42030 Saint-Etienne Cédex (Loire)
(FR)**

(72) Inventeur: **Lauzier, René, Ruy (Isére) (FR)**

(74) Mandataire: **Perrier, Jean-Pierre et al, Cabinet GERMAIN
& MAUREAU 12 rue de la République,
F-42000 St-Etienne (FR)**

Contacteur de feu arrière «stop» pour véhicule tel que cyclomoteur ou motocyclette.

La présente invention a pour objet un contacteur de feu arrière «stop», placé sur le guidon de véhicules motorisés à deux roues tels que cyclomoteurs et motocyclettes. Ce contacteur assure, de façon générale, l'alimentation électrique d'une lampe située à l'arrière du véhiucle, dès que le conducteur actionne un levier de frein.

Actuellement, les contacteurs de ce genre sont des organes rapportés sur le guidon, ce qui présente divers inconvénients: encombrement, nécessité d'une fixation spéciale, protection insuffisante. La présente invention vise à remédier à tous ces inconvénients en fournissant une solution nouvelle permettant une «intégration» du contacteur dans les éléments du frein.

A cet effet, le contacteur de feu arrière «stop» pour véhicule tel que cyclomoteur ou motocyclette, objet de l'invention, comprend un corps creux monté dans un logement du support auquel est articulé le levier de frein, et ledit corps renferme un basculeur portant au moins un contact électrique mobile et possédant une partie faisant saillie à travers une ouverture dudit corps, pour prendre appui contre une face du levier de frein, sous l'effet d'un ressort agissant sur ledit basculeur et logé, comme ce dernier, dans le corps creux.

Ce contacteur, étant entièrement logé dans le support ou «cocotte» auquel est articulé le levier de frein, se trouve parfaitement protégé, et il va de soi que cette solution conduit aussi à un encombrement minimal.

Suivant une forme de réalisation préférée de l'invention, le ressort de rappel du levier de frein est appuyé contre un bossage que comporte le corps creux du contacteur, de manière à maintenir en place le contacteur au fond de son logement dans le support auquel est articulé le levier de frein. La retenue du contacteur est ainsi assurée sans aucun organe de fication supplémentaire, d'où une simplification et une économie.

Avantageusement, chaque contact électrique du basculeur est réalisé sous la forme d'un insert en matière conductrice, orienté radialement et coopérant avec une paire de lamelles conductrices parallèles. Ces lamelles sont connectées aux fils de l'installation électrique du véhicule. Le nombre d'inserts et de paires de lamelles peut être choisi librement pour réaliser un contacteur unipolaire, bipolaire ou même multipolaire, sans modifier le restant de la structure de ce conducteur. Avec une telle disposition, la connexion électrique s'effectue par frottement d'un insert conducteur sur des lamelles conductrices, alors que la plupart des contacteurs du commerce remplissent cette fonction par simple pression, ce qui a pour conséquence une oxydation rapide des contacts.

Le contacteur, objet de l'invention, comporte encore pour avantages d'avoir un mécanisme indéréglable, de permettre le passage des fils électriques à l'intérieur du corps en un faisceau unique, et d'être facile à monter.

De toute façon l'invention sera mieux comprise à l'aide de la description qui suit, en référence au dessin schématique annexé représentant , à titre d'exemple non limitatif, une forme d'exécution de ce contacteur de feu arrière «stop» pour véhicule tel que cyclomoteur ou motocyclette.

Figure 1 est une vue générale, en coupe longitudinale, du contacteur objet de l'invention, montrant la structure et le montage de celui-ci;

Figure 2 est une section de ce contacteur, suivant 2-2 de figure 1.

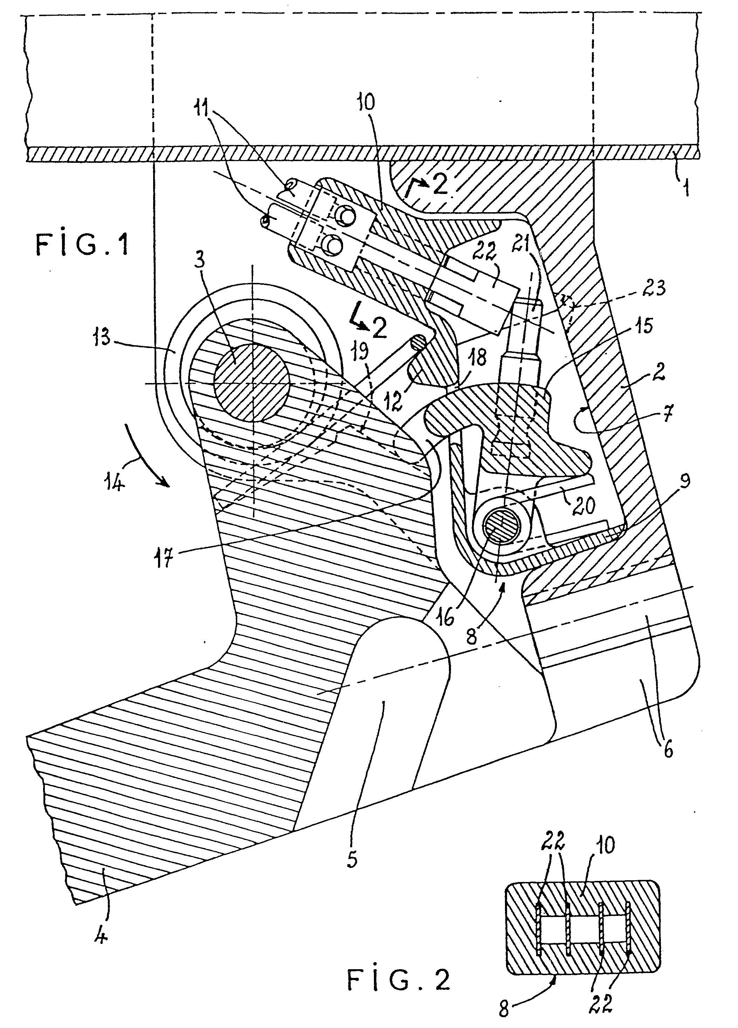

La figure 1 montre partiellement le guidon 1 d'un cyclomoteur, près d'une de ses extrémités, et le support 2 ou «cocotte«, sur lequel est monté pivotant, autour d'un axe 3, le levier de frein 4. Ce dernier assure, de manière classique, la commande de freinage par l'intermédiaire d'un câble sous gaine, non représenté, dont l'extrémité est retenue dans un logement 5 du levier 4, ledit câble traversant aussi le support 2 par une fente 6.

Le support 2 possède un logement 7, délimité par ses deux parois latérales, par sa paroi opposée à l'axe 3, et par ses deux parties proches, respectivement, du guidon 1 et de la fente 6. Le logement 7 reçoit le corps 8 du contacteur de feu «stop». Ce corps 8 se divise en une partie creuse 9, qui s'emboîte dans le logement 7 et renferme les organes internes du contacteur, et en une partie plus massive 10, à laquelle aboutit un faisceau de fils électriques 11. Le corps 8 du contacteur comporte encore un bossage 12 tourné vers l'axe 3 du levier de frein 4. Un ressort de torsion 13, enroulé autour dudit axe 3 et appuyé, d'une part, sur le levier 4, d'autre part sur le bossage 12, assure à la fois le rappel du levier 4, dans le sens de la flèche 14, et le maintien en place du corps 8 au fond du logement 7.

La partie creuse 9 du corps 8 renferme un basculeur 15, monté pivotant autour d'un axe 16 parallèle à l'axe 3 du levier de frein 4. Le basculeur 15 comporte un double doigt 17, qui traverse le corps 8 par une ouverture 18 et qui prend appui contre des faces 19 du levier 4. Cet appui est assuré par un ressort de torsion 20, logé à l'intérieur de la partie creuse 9, le ressort 20 étant enroulé autour de l'axe 16 et appliqué d'une part contre la paroi interne du corps, d'autre part contre le basculeur 15.

Le basculeur 15 porte deux inserts 21 en matière conductrice, orientée radialement relativement à l'axe 16. Ces inserts 21 coopèrent, respectivement, avec deux paires de lamelles conductrices parallèles 22, bien visibles sur la figure 2, qui sont conncectées aux fils électrqiues 11.

Lorsque le levier de frein 4 est actionné et pivote autour de l'axe 3 dans le sens opposé à celui de la flèche 14, le basculeur 15, poussé par le ressort 20, pivote autour de l'axe 16, de sorte que les inserts 21 se rapprochent des lamelles 22 et viennent en contact avec ces dernières, établissant ainsi le passage du courant électrique dans les fils 11 qui alimentent le feu arrière «stop». Quand le levier de frein 4 est relâché, le ressort 13 le rappelle en position de repos, et simultanément, le levier 4 repousse le basculeur 15, de manière à éloigner les inserts 21 des lamelles 22, ce qui interrompt le contact électrique. En position de repos, les extrémités libres des inserts 21 peuvent s'engager dans des évidements 23 du support 2.

Comme il va de soi, l'invention ne se limite pas à la seule forme d'exécution de ce contacteur de feu arrière «stop» qui a été décrite ci-dessus, à titre d'exemple; elle en embrasse, au contraire, toutes les variantes de réalisation et d'application conçues suivant le même principe. C'est ainsi que l'on ne s'éloignerait pas du cadre de l'invention en modifiant les formes de détail des pièces telles que le corps 8 et le basculeur 15, ou encore en réalisant, suivant la même conception, un contacteur unipolaire (donc avec un seul insert 21 et une seule paire de lamelles 22) à la place du contacteur bipolaire décrit plus haut. Enfin, le type ou la catégorie du véhicule peut être quelconque: cyclomoteur, vélomoteur, motocyclette, scooter . . .

## Revendications

1-Contacteur de feu arrière «stop» pour véhicule tel que cyclomoteur ou motocyclette, caractérisé en ce qu'il comprend un corps creux (8) monté dans un logement (7) du support (2) auquel est articulé le levier de frein (4), et en ce que ledit corps (8) renferme un basculeur (15) portant au moins un contact électrique mobile (21) et possédant une partie (17) faisant saillie à travers une ouverture (18) dudit corps (8), pour prendre appui contre une face (19) du levier de frein (4), sous l'effet d'un ressort (20) agissant sur ledit basculeur (15) et logé, comme ce dernier, dans le corps creux (8).

2-Contacteur de feu arrière «stop» selon la revendication 1, caractérisé en ce que le ressort de rappel (13) du levier de frein (4) est appuyé contre un bossage (12) que comporte le corps creux (8) du contacteur, de manière à maintenir en place le contacteur au fond de son logement (7) dans le support (2) auquel est articulé le levier de frein (4).

3-Contacteur de feu arrière «stop» selon la revendication 1 ou 2, caractérisé en ce que chaque contact électrique du basculeur (15) est réalisé sous la forme d'un insert (21) en matière conductrice, orienté radialement et coopérant avec une paire de lamelles conductrices parallèles (22).

## Patentansprüche

1. Bremslichtschalter für ein Motorfahrzeug, insbesondere für ein Motorrad oder ein Moped, dadurch gekennzeichnet, das er einen Hohlkörper (8) umfasst, der in einem Sitz (7) der Halterung (2) montiert ist, an welcher der Bremshebel (4) angelenkt ist, und dass der Hohlkörper (8) einen Kipphebel (15) umschliesst, der wenigstens einen beweglichen Kontakt (21) trägt und ein Teilstück (17) besitzt, welches durch eine Öffnung (18) des Hohlkörpers (8) hindurchragt und sich unter der Wirkung einer an dem Kipphebel (15) angreifenden Feder (20) gegen eine Fläche (19) des Bremshebels (4) abstützt, wobei die Feder (20) ebenso wie der Kipphebel (19) in dem Hohlkörper (8) augenommen ist.

2. Bremslichtschalter nach Anspruch 1, dadurch gekennzeichnet, dass die Rückholfeder (13) des Bremshebels (4) sich gegen einen an dem Hohlkörper (8) des Schalters ausgebildeten Vorsprung (12) abstützt, derart dass sie (13) den Schalter auf dem Grund seines Sitzes (7) in Position hält, der sich in der Halterung (2) befindet, an welcher der Bremshebel (4) angelenkt ist.

3. Bremslichtschalter nach Anspruch 1 oder 2, dadurch gekennzeichnet, dass der bzw. jeder elektrische Kontakt des Kipphebels (15) als ein radial ausgerichtetes Einsatzteil (21) aus elektrisch leitfähigem Material ausgebildet ist, welches mit einem Paar paralleler leitfähiger Lamellen (22) zusammenwirkt.

## Claims

1. Brake light switch for a vehicle such as a motorcycle or moped, characterised in that it comprises a hollow body (8) mounted in a housing (7) in the support (2) to which the brake lever (4) is pivoted and in that said body (8) encloses a rocker member (15) supporting at least one movable electrical contact (21) and comprising a part (17) projecting through an opening (18) in the said body (8), in order to bear against a face (19) of the brake lever (4), under the action of a spring (20) acting on said rocker member (15) and housed, like the latter, in the hollow body (8).

2. Brake light switch according to claim 1, characterised in that the return spring (13) for the brake lever (4) is pressed against a boss (12) of the hollow body (8) of the switch, in order to keep the switch in poisition at the bottom of its housing (7) in the support (2) to which the brake lever (4) ist pivoted.

3. Brake light switch according to claim 1 or 2, characterised in that each electrical contact of the rocker member (15) is constructed in the form of an insert (21) of conducting material, oriented radially and co-operating with a pair of parallel conducting strips (22).

FIG.1

FIG.2